# EUROPÄISCHE PATENTSCHRIFT

(11) **EP 2 623 815 B1**
(45) Veröffentlichungstag und Bekanntmachung des Hinweises auf die Patenterteilung: **16.04.2014**
(21) Anmeldenummer: 13000215.7
(22) Anmeldetag: 16.01.2013
(51) Int. Cl.: F16D 59/02, F16D 65/18

(54) **Federdruckbremse mit einem Magnetgehäuse**
Spring brake with a magnet housing
Frein à pression de ressort avec un boîtier magnétique

(30) Priorität: 31.01.2012 DE 202012000897 U
(43) Veröffentlichungstag der Anmeldung: 07.08.2013
(73) Patentinhaber: Kendrion (Aerzen) GmbH, 31855 Aerzen (DE)
(72) Erfinder: Knop, Rolf, 36299 Extertal (DE)
(74) Vertreter: Börjes-Pestalozza, Heinrich

(56) Entgegenhaltungen:
- DE-A1- 19 838 171
- DE-B3-102006 010 656
- DE-B3-102012 001 701

## Beschreibung

Die Erfindung betrifft eine Federdruckbremse mit einem einen ringförmigen Aufnahmeraum für eine elektromagnetische Spule aufweisenden Magnetgehäuse, welches mittels Befestigungsschrauben mit einem Gehäuse eines Antriebs verbindbar ist, mit einer koaxial zu der elektromagnetischen Spule angeordneten unverdrehbaren Ankerscheibe aus magnetisch leitendem Werkstoff, mit einer koaxial zu der Ankerscheibe angeordneten, als Bremsscheibe dienenden Rotorscheibe und mit einer unverdrehbaren, als Widerlager für die Brems- oder Rotorscheibe dienenden Gegenscheibe, wobei die Federdruckbremse eine zentrale Druckfeder oder mit radialem Abstand zur Längsmittelachse angeordnete einzelne Druckfedern zur Erzeugung des Bremsdrucks zwischen Ankerscheibe, Bremsscheibe und Gegenscheibe bei nicht bestromter elektromagnetischer aufweist und wobei Befestigungsschrauben zum Verbinden des Magnetgehäuses mit einer Halterung, einem Gehäuse oder einem Flansch für die Gegenscheibe vorgesehen sind.

Eine derartige Federdruckbremse ist aus DE 102006010656 B3 bekannt und hat sich bewährt.

Eine vergleichbare Federdruckbremse ist aus DE 4031245 A1 bekannt.

Aus der DE 198 38 171 A1 ist ebenfalls eine vergleichbare Federdruckbremse bekannt. Der magnetisierbare, dazu die elektromagnetische Spule aufnehmende Topfmagnet hat dabei einen einstückig mit ihm verbundenen Flansch, der von Befestigungsschrauben durchsetzt wird, die gleichzeitig eine zu dem Gehäuse dieser Federdruckbremse gehörende, koaxial zu dem Topfmagneten angeordnete Kunststoffhülse durchsetzen.

Vor allem in den Fällen, in welchen die Federdruckbremse eine verhältnismäßig kleine oder geringe Abmessung haben soll, weil nur ein begrenzter Raum für ihre Unterbringung zur Verfügung steht, ist das Gewicht derart in bekannter Weise aufgebauter Federdruckbremsen relativ hoch. Darüber hinaus gibt es vor allem an dem Magnetgehäuse häufig Streuflüsse und magnetische Verluste. Solche Verluste können dadurch entstehen, dass an dem Magnetgehäuse auch die Befestigung der Federdruckbremse selbst angreifen muss, also die erwähnten Befestigungsschrauben vorgesehen sind, wie es beispielsweise aus der vorerwähnten DE 198 38 171 A1 bekannt ist. Außerdem benötigt der radial nach außen orientierte Flansch des Magnetgehäuses in radialer Richtung zusätzlich Platz.

Außerdem können die Druckfedern insbesondere bei einer Anordnung mit radialem Abstand zur Längsmittelachse zusätzlich Platz benötigen, wodurch das Magnetgehäuse vergrößert wird, was wiederum die Gefahr von Streuflüssen und magnetischen Verlusten vergrößern kann.

Es besteht deshalb die Aufgabe, eine Federdruckbremse der eingangs definierten Art zu schaffen, bei welcher die Gefahr von magnetischen oder Streuverlusten vermindert oder möglichst weitgehend vermieden werden kann.

Zur Lösung dieser Aufgabe ist die eingangs definierte Federdruckbremse dadurch gekennzeichnet, dass zumindest das Magnetgehäuse aus wenigstens zwei Teilen besteht, deren erster Teil als Topfmagnet den ringförmigen Aufnahmeraum für die magnetische Spule aufweist und der aus magnetisierbarem Werkstoff besteht, und dass der zweite Teil des Magnetgehäuses mit dem ersten Teil verbunden ist, die Befestigungsstellen für Befestigungsschrauben aufweist und aus einem nichtmagnetisierbarem Werkstoff besteht, wobei der aus nicht magnetisierbaren Werkstoff bestehende zweite Teil des Magnetgehäuses an seinem Außenumfang in axialer Richtung orientierte Lochungen oder Vorsprünge oder Querschnittserweiterungen für die Befestigungsschrauben aufweist, und dass der erste Teil des Magnetgehäuses bohrungsfrei oder lochungsfrei ist in dem Sinne, dass er nicht von den Befestigungsschrauben beaufschlagt wird.

Durch die überraschende Zusammensetzung des Magnetgehäuses einerseits aus dem Topfmagnet aus magnetisierbarem Werkstoff und andererseits einem weiteren Teil aus nicht magnetisierbarem Werkstoff ergibt sich eine Verminderung der magnetisierbaren Masse, so dass die Gefahr von Streuflüssen und/oder magnetischen Verlusten entsprechend vermindert oder sogar vermieden ist.

Durch die verringerte Masse an magnetisierbarem Werkstoff ergibt sich der zusätzliche Vorteil, dass die erfindungsgemäße Federdruckbremse schneller auf das Ein- oder Ausschalten des Stromes für die elektromagnetische Spule reagieren kann, weil ein geringeres Volumen magnetisiert oder entmagnetisiert werden muss. Entsprechend geringer kann die installierte Spulenleistung sein, was Kostenvorteile und auch Gewichtsvorteile haben kann. Ferner ergeben sich kurze Ein- und Ausschaltzeiten. Da erfindungsgemäß die Befestigungsschrauben an dem zweiten Teil des Magnetgehäuses angreifen und somit der erste Teil bezüglich solcher Befestigungsschrauben bohrungsfrei und lochungsfrei ist, muss er nicht so bemessen sein, dass Lochungen für Befestigungsschrauben Platz finden.

Eine besonders zweckmäßige und vorteilhafte Ausgestaltung der erfindungsgemäßen Federdruckbremse kann vorsehen, dass der mit dem Topfmagnet verbundene zweite Teil des Magnetgehäuses aus einem Werkstoff besteht, der ein geringeres spezifisches Gewicht als der Werkstoff des ersten Teils des Magnetgehäuses, also des Topfmagneten hat. Da das Magnetgehäuse also teilweise aus leichterem Werkstoff besteht, kann das Gesamtgewicht des Magnetgehäuses entsprechend verringert sein.

Der aus einem leichteren Werkstoff als der Topfmagnet bzw. der erste Teil des Magnetgehäuses bestehende, nicht magnetisierbare zweite Teil des Magnetgehäuses kann -aufgrund seiner Form und seiner Abmessungen- ein geringeres Gewicht als der erste Teil des Magnetgehäuses haben. Dabei kann man davon ausgehen, dass das gesamte Volumen des Werkstoffs des zweiten Teils des Magnetgehäuses geringer als das Volumen des ersten Teils oder des Topfmagneten ist, so dass schon daraus aufgrund der unterschiedlichen spezifischen Gewichte das Gesamtgewicht des nicht magnetisierbaren zweiten Teils des Magnetgehäuses deutlich geringer als das des ersten Teils ist. In jedem Falle ist das Gesamtgewicht gegenüber einer Federdruckbremse vermindert, deren Magnetgehäuse praktisch vollständig aus magnetisierbarem Werkstoff besteht.

Trotz dieser erfindungsgemäßen Fertigung des Magnetgehäuses aus wenigstens zwei unterschiedlichen Werkstoffen können in zweckmäßiger Weise eine zentrale Druckfeder oder mit radialem Abstand zur Längsmittelachse dieser Federdruckbremse und ihres Magnetgehäuses angeordnete einzelne Druckfedern die Bremsscheibe an der Gegenscheibe bzw. die Ankerscheibe an der Bremsscheibe und dadurch die Bremsscheibe an der Gegenscheibe andrücken, wenn die elektromagnetische Spule nicht bestromt ist.

Der nichtmagnetisierbare Werkstoff des zweiten Teils des Magnetgehäuses kann ein spritzgießfähiger Werkstoff, insbesondere Kunststoff oder Aluminium sein. Dadurch wird die Gesamtherstellung vereinfacht.

Möglich ist es, dass der erste aus magnetisierbarem Werkstoff bestehende Teil des Magnetgehäuses und der zweite Teil des Magnetgehäuses durch Spritzgießen miteinander verbunden sind, wenn ein entsprechend spritzgießfähiger Werkstoff den zweiten Teil bildet. Somit können eventuelle zusätzliche Befestigungsvorgänge oder Befestigungselemente vermieden werden.

Zumindest an der Außenseite oder Umfangsseite des ersten magnetisierbaren Teils des Magnetgehäuses kann wenigstens ein von der Kontur dieser Außenseite, insbesondere von einer runden oder zylindrischen Kontur dieser Außenseite abweichender Bereich oder mehrere derartige Bereiche vorgesehen sein, der/die in Gebrauchsstellung in den nichtmagnetisierbaren Werkstoff des zweiten Teils von innen her eingreift oder eingebettet ist/sind. Es kann also an einem in der Regel zylindrischen Topfmagneten außenseitig, insbesondere an seinem Umfang, gegebenenfalls aber auch an seiner Stirnseite, ein Vorsprung oder eine Vertiefung oder dergleichen von einer glatten Kontur abweichender Bereich vorgesehen sein, der durch den Werkstoff des zweiten Teils umschlossen wird, so dass die beiden Teile drehfest und bevorzugt formschlüssig verbunden sind, was eine festere Verbindung ergibt, als wenn der zweite Teil eine glatte Außenseite des ersten Teiles umgreift. Dies ermöglicht auch gegebenenfalls eine höhere Lebensdauer vor allem bei einem Einsatz dieser Federdruckbremse bei vibrationsanfälligen oder dynamisch belasteten Anwendungen.

Eine weitere Ausgestaltung der Erfindung zur Einsparung von Gewicht kann vorsehen, dass der aus nicht magnetisierbarem Werkstoff bestehende zweite Teil des Magnetgehäuses an der von ihm überdeckten oder übergriffenen Stirnseite des Topfmagneten auf dessen der Ankerscheibe abgewandter Seite wenigstens eine oder mehrere Unterbrechungen aufweist. Durch solche Unterbrechungen kann die Menge des Werkstoffs des zweiten Teils des Magnetgehäuses vermindert werden. Dabei haben diese Unterbrechungen den weiteren Vorteil, dass die Wärmeabfuhr von dem magnetisierbaren Teil begünstigt wird.

Eine weitere Möglichkeit besteht darin, dass die elektrische Zuleitung zu der elektromagnetischen Spule durch eine stirnseitige Unterbrechung des zweiten Teils des Magnetgehäuses verläuft. Der magnetisierbare erste Teil des Magnetgehäuses kann aus Sintermetall bestehen. Dies hat den Vorteil, dass bei der Fertigung dieses ersten Teils des Magnetgehäuses auf eine für Topfmagneten bewährte Technik zurückgegriffen werden kann.

Für die mit der Bremsscheibe zusammenwirkende Gegenscheibe ist zweckmäßigerweise eine besondere Halterung oder ein Flansch oder dergleichen Lagerung vorgesehen. Eine Ausgestaltung der Erfindung kann dabei vorsehen, dass diese mit dem Magnetgehäuse verbindbare oder in Gebrauchsstellung verbundene Halterung für die Gegenscheibe aus einem nicht magnetisierbarem Werkstoff, insbesondere aus einem Werkstoff besteht, dessen spezifisches Gewicht geringer als das von Stahl oder magnetisierbarem Sintermetall ist. Somit wird der Gedanke, Gewicht einzusparen und Streuverluste möglichst auszuschließen, auch an dieser Halterung für die Gegenscheibe der Federdruckbremse angewandt oder verwirklicht.

Dabei ist es möglich, dass die Halterung für die Gegenscheibe als Deckel oder Gehäuseteil ausgebildet ist, der in seinem Inneren die konzentrisch zur Längsmittelachse angeordnete Gegenscheibe enthält und mit dem Magnetgehäuse in Gebrauchsstellung über Befestigungsschrauben und/oder über die Befestigungsschrauben für die Federdruckbremse verbunden ist und aus Kunststoff
oder Aluminium, bevorzugt aus demselben Werkstoff wie der zweite Teil des Magnetgehäuses besteht. Gegebenenfalls kann diese bevorzugt als Deckel oder Gehäuse ausgebildete Halterung für die Gegenscheibe mit eigens für sie vorgesehenen Befestigungsschrauben oder gegebenenfalls zusätzlich mit den Befestigungsschrauben fixiert sein, die auch für die Montage der Federdruckbremse beispielsweise an einem Motorgehäuse vorgesehen sind.

Eine weitere Ausgestaltung der erfindungsgemäßen Federdruckbremse, insbesondere einer solchen mit einer Halterung für die Gegenscheibe, kann vorsehen, dass diese Halterung für die Gegenscheibe wenigstens eine in axialer Richtung am Umfang der Federdruckbremse verlaufende Öffnung für einen radial darin eingreifenden Vorsprung der Ankerscheibe aufweist und dass die Halterung dadurch auch die Ankerscheibe in deren Gebrauchsstellung hält. Dabei ist diese Öffnung in axialer Richtung genügend groß bemessen, um der Ankerscheibe die für ihre Funktion erforderliche axiale Bewegungsfreiheit zu geben. Die Halterung für die Gegenscheibe bekommt dadurch eine Zusatzfunktion, denn sie sorgt für die Festlegung der Ankerscheibe in Drehrichtung, so dass keine sonstigen, gegebenenfalls aufwendigen Maßnahmen notwendig sind, um die Ankerscheibe drehfest bzw. unverdrehbar zu machen.

Für eine symmetrische und ausgewogene Anordnung ist es zweckmäßig, wenn die Halterung für die Gegenscheibe wenigstens zwei einander am Umfang der Anordnung gegenüberliegende Öffnungen für zwei miteinander fluchtende Vorsprünge der Ankerscheibe aufweist. Die Ankerscheibe kann also zweckmäßigerweise zwei gegenüber ihrem Umfang radial überstehende Bereiche oder Vorsprünge haben, die in die dazu passend angeordneten, einander gegenüberliegenden Öffnungen der Halterung in Gebrauchsstellung eingreifen und dadurch eine entsprechend ausgewogene und symmetrische Aufnahme eines auf die Ankerscheibe im Bremsfall wirkenden Drehmoments ergeben.

Der auch an der Stirnseite des Topfmagneten angeordnete zweite Teil des Magnetgehäuses aus nicht magnetisierbarem Werkstoff kann eine zentrale Öffnung koaxial zu der Längsmittelachse des Topfmagneten und zu einer diesen durchsetzenden zentralen Öffnung aufweisen, deren Kreisquerschnitt, oder Durchmesser geringer als der der zentralen Öffnung der Federdruckbremse ist, und der dadurch radial in den Bereich oder Querschnitt der zentralen Öffnung ragende Ringbereich des zweiten Teils kann eine Abstützfläche für eine zentrale Druckfeder bilden. Es ist also möglich, den zweiten Teil des Magnetgehäuses im Bereich der zentralen Öffnung des Topfmagneten mit einer Öffnung zu versehen, die enger als die zentrale Öffnung ist, wobei dieser zweite Teil die zentrale Öffnung des Topfmagneten gegebenenfalls sogar vollständig überdecken kann, um die zentrale Druckfeder einer derartigen Federdruckbremse abzustützen.

Vor allem bei Kombination einzelner oder mehrerer der vorgeschriebenen Merkmale und Maßnahmen ergibt sich eine Federdruckbremse, bei welcher durch die Aufteilung des Magnetgehäuses die Masse an magnetisierbarem Werkstoff vermindert und insgesamt auch das Gewicht verringert sein kann, so dass magnetische Verluste, Streuflüsse oder Streuverluste im Bereich der elektromagnetischen Spule und des Topfmagneten weitestgehend oder gegebenenfalls sogar vollständig vermieden werden können. Dies kann unterstützt werden dadurch, dass auch der Flansch oder die Halterung für die Gegenscheibe aus einem solchen nicht magnetisierbarem Werkstoff besteht, wie er für den zweiten Teil des Magnetgehäuses vorgesehen ist. Gleichzeitig kann dabei die Halterung für die als Widerlager für die Bremsscheibe dienenden Gegenscheibe dazu benutzt werden, die Ankerscheibe an deren Umfang formschlüssig zu erfassen und dadurch unverdrehbar zu machen.

Nachstehend ist ein Ausführungsbeispiel der Erfindung anhand der Zeichnung näher beschrieben. Es zeigt in zum Teil schematisierter Darstellung:
- Fig. 1:: einen Längsschnitt durch eine erfindungsgemäße Federdruckbremse, deren Magnetgehäuse aus zwei Teilen aus unterschiedlichen Werkstoffen zusammengesetzt ist.
- Fig. 2:: eine schaubildliche Ansicht auf die mit einem Antrieb zu verbindende Stirnseite der erfindungsgemäßen Federdruckbremse in vormontiertem Zustand,
- Fig. 3:: eine schaubildliche Darstellung der erfindungsgemäßen Federdruckbremse mit Blick auf die einem Antrieb abgewandte Stirnseite, wobei die Durchbrüche an dem zweiten Teil des Magnetgehäuses erkennbar sind, die Teile des Topfmagneten frei lassen,
- Fig. 4:: einen Längsschnitt durch das aus zwei Teilen unterschiedlicher Werkstoffe bestehende Magnetgehäuse mit dem eine Ringnut für eine elektromagnetische Spule aufweisenden, aus Sintereisen bestehenden Topfmagneten und dem zweiten Teil, welcher aus nicht magnetisierbarem Material besteht und Lochungen für Befestigungsschrauben aufweist,
- Fig. 5:: eine schaubildliche Ansicht des Magnetgehäuses mit Blick auf die in Figur 3 dargestellte Stirnseite,
- Fig. 6:: eine schaubildliche Darstellung,des in Figur 4 gezeigten Magnetgehäuses mit Blick auf die an dem Topfmagneten vorgesehene Ringnut,
- Fig. 7:: einen Längsschnitt einer als Widerlager für die Bremsscheibe dienenden Gegenscheibe und deren aus nicht magnetisierbarem Werkstoff bestehenden gehäuseartigen Halterung,
- Fig. 8:: eine schaubildliche Darstellung der Halterung gem. Figur 7 mit der in deren inneren angeordneten Gegenscheibe sowie
- Fig. 9:: eine schaubildliche Sicht auf die in Gebrauchsstellung einem Antrieb zugewandte Stirnseite der Halterung gemäß den Figuren 7 und 8.

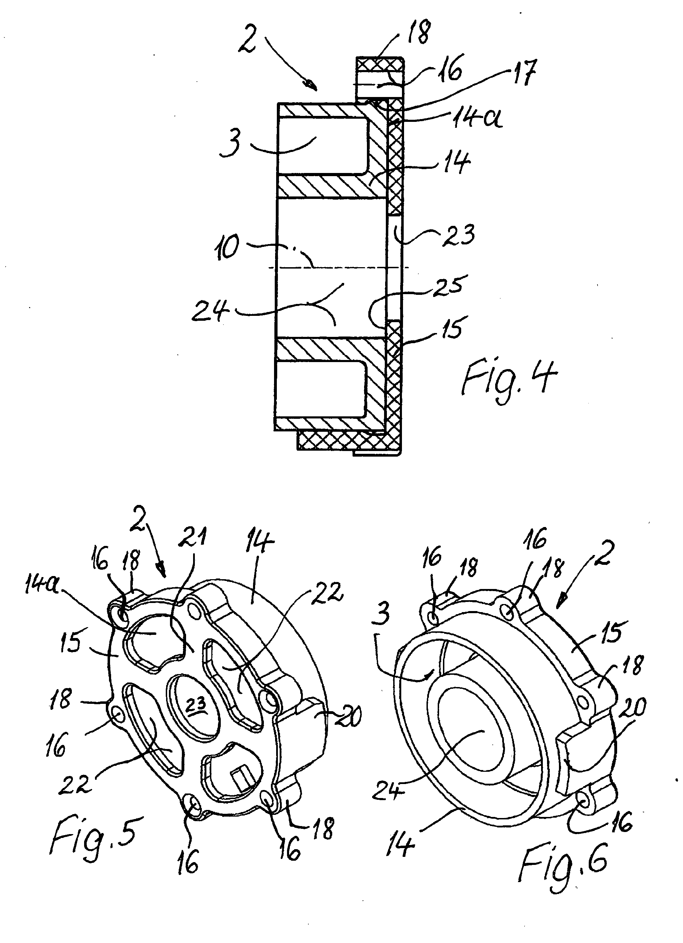

Eine im Ganzen mit 1 bezeichnete Federdruckbremse weist ein Magnetgehäuse 2 auf, welches in den Figuren 4 bis 6 separat dargestellt ist. Dieses Magnetgehäuse 2 weist einen ringförmigen Aufnahmeraum 3, auch als "Ringnut 3" bezeichnet, auf, worin eine elektromagnetische Spule 4 angeordnet ist.

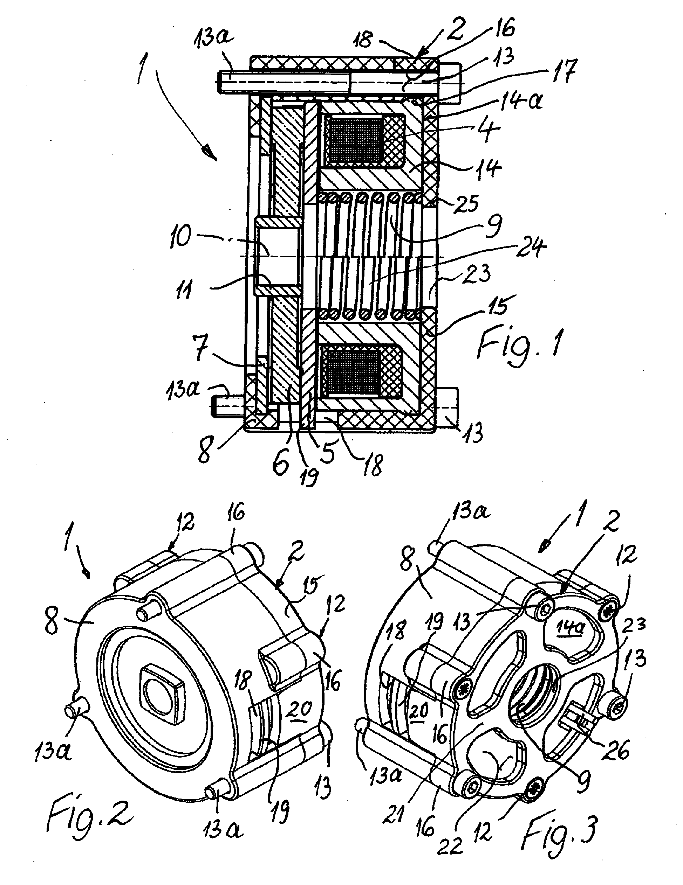

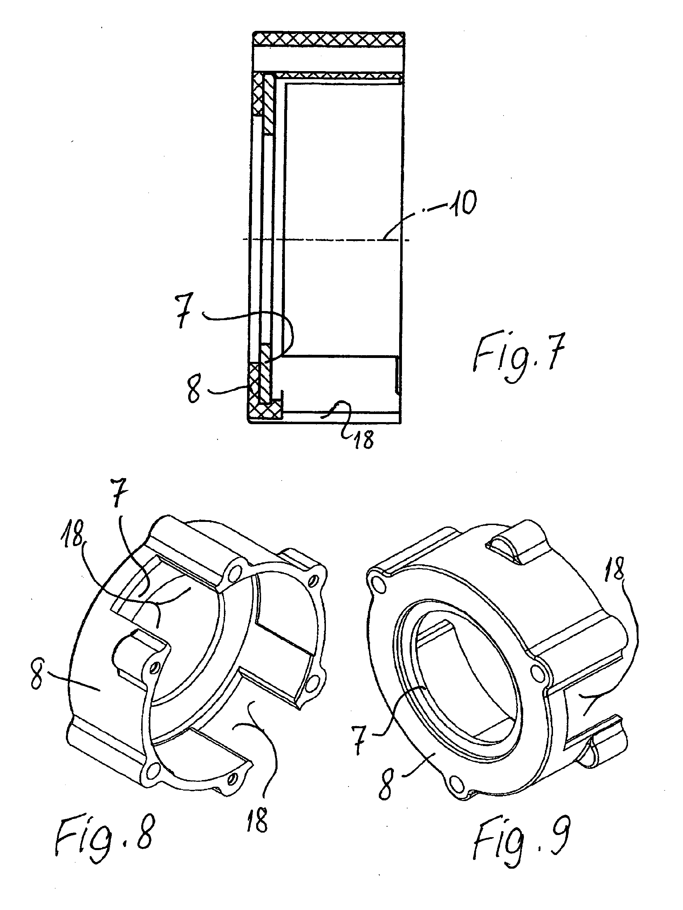

In Figur 1 erkennt man eine koaxial zu der elektromagnetischen Spule 4 angeordnete unverdrehbare Ankerscheibe 5 aus magnetisch leitendem Werkstoff, eine koaxial dazu angeordnete, als Bremsscheibe 6 dienende Rotorscheibe und eine wiederum unverdrehbare, als Widerlager für die Rotor- oder Bremsscheibe 6 dienende Gegenscheibe 7, die in einer sie umschließenden gehäuseartigen Halterung 8 angeordnet und von dieser in axialer Richtung abgestützt ist (siehe auch Fig. 7 bis 9).

In Figur 1 erkennt man deutlich, dass diese Federdruckbremse 1 eine zentrale Druckfeder 9 aufweist, die konzentrisch zur Längsmittelachse 10 der gesamten Federdruckbremse 1 und einer zu dieser gehörenden Nabe 11 angeordnet ist, auf welcher Nabe 11 die Bremsscheibe 6 mit dieser unverdrehbar verbunden angeordnet ist. Diese Druckfeder 9 dient zum Andrücken der Bremsscheibe 6 an die Gegenscheibe 7 bei nicht bestromter elektromagnetischer Spule 4. Dazu kann die Ankerscheibe 5 unter dem Druck dieser Druckfedern 9 in axialer Richtung von der elektromagnetischen Spule 4 wegbewegt werden, wodurch der Druck auf die Bremsscheibe 6 und dadurch auch die Gegenscheibe 7 entsteht, so dass die Bremse geschlossen ist und durch Bestromen der Spule 4 und Zurückziehen der Ankerscheibe 5 geöffnet werden kann. Dabei erkennt man in den Figuren 2 und 3 Befestigungsschrauben 12 zum Verbinden des Magnetgehäuses 2 mit der Halterung 8, die als Aufnahmegehäuse für die Gegenscheibe 7 dient, und ferner Befestigungsschrauben 13 zum Verbinden des Magnetgehäuses 2 mit einem nicht dargestellten Gehäuses eines Antriebs, auf dessen in die Nabe 11 eingreifende Welle eine Bremskraft ausgeübt werden können soll. Man erkennt in den Figuren 1 bis 3 deutlich, wie diese Befestigungsschrauben 13 über die Halterung 8 axial in Richtung zu einem solchen Antriebsgehäuse überstehen, so dass dieser Überstand 13 a für die erwähnte Befestigung benutzt werden kann.

Vor allem anhand der Figur 4, aber auch anhand der Figur 1 erkennt man, dass das Magnetgehäuse 2 aus zwei Teilen besteht, deren erster Teil 14 als Topfmagnet ausgebildet und deshalb im Folgenden auch "Topfmagnet 14" genannt ist, welcher den ringförmigen Aufnahmeraum 3 für die magnetische Spule 4 aufweist. Demgemäß besteht dieser erste Teil oder Topfmagnet 14 aus magnetisierbarem Werkstoff und bevorzugt aus Sintermetall.

Der zweite Teil 15 des Magnetgehäuses 2 ist, wie besonders gut in Figur 4 erkennbar, mit dem ersten Teil 14 verbunden und weist die Befestigungsstellen 16 für Befestigungsschrauben 12 und 13 auf, so dass diese Befestigungsstellen 16 den magnetisierbaren Topfmagneten 14 nicht durchsetzen, also kein magnetisierbarer Werkstoff benötigt wird, um solche Befestigungsstellen 16 aufzunehmen oder zu bilden. Dieser zweite Teil 15 besteht dabei aus nicht magnetisierbarem Werkstoff, so dass insgesamt für das Magnetgehäuse 2 entsprechend wenig magnetisierbarer Werkstoff erforderlich ist. Somit können magnetische Verluste oder Streuflüsse weitestgehend oder vollständig vermieden werden.

Der mit dem Topfmagnet 14 verbundene zweite Teil 15 des Magnetgehäuses 2 besteht dabei aus einem Werkstoff, der ein geringeres spezifischeres Gewicht als der Werkstoff des Topfmagneten 14 hat. Dabei hat dieser aus einem leichteren Werkstoff als der Topfmagnet 14 bestehende nicht magnetisierbare zweite Teil 15 des Magnetgehäuses 2 aufgrund seiner Form und seiner Abmessungen auch insgesamt ein geringeres Gewicht als der erste Teil oder Topfmagnet 14. Somit kann die gesamte Anordnung bzw. Federdruckbremse 1 gewichtssparend aufgebaut sein. Beispielsweise kann der nicht magnetisierbare Werkstoff des zweiten Teils 15 des Magnetgehäuses 2 ein spritzgießfähiger Werkstoff, z.B. Kunststoff oder Aluminium, sein. Dadurch ist es möglich, den ersten Teil 14 und den zweiten Teil 15 des Magnetgehäuses 2 durch Spritzgießen miteinander zu verbinden.

In den Figuren 1 und 4 ist angedeutet, dass an der Umfangsseite des ersten magnetisierbaren Teils 14 des Magnetgehäuses 2 nahe der Stirnseite 14 a dieses Teils 14 ein von der Kontur dieser Außenseite oder dieses zylindrischen Außenumfangs abweichender Bereich in Form eines Vorsprunges 17 vorgesehen ist, der in den nicht magnetisierbaren Werkstoff des zweiten Teils 15 eingreift oder darin eingebettet ist. Dabei kann dieser von einer zylindrischen Kontur abweichende Bereich 16 auch ringförmig umlaufen oder aber am Umfang unterbrochen oder mit Vertiefungen versehen sein, um nicht nur in axialer, sondern auch in radialer Richtung Formschluss zwischen den beiden Teilen 14 und 15 herzustellen. Dabei könnte auch "negativer Vorsprung" vorgesehen sein, in welchen der Werkstoff des zweiten Teils 15 eingreift.

Aus den Figuren 2 bis 6 ergibt sich, dass der aus nicht magnetisierbarem Werkstoff bestehende zweite Teil 15 des Magnetgehäuses 2 an seinem Außenumfang in radialer Richtung orientierte Vorsprünge oder Querschnittserweiterungen 18 für die als Lochungen ausgebildeten Befestigungsstellen 16 für Befestigungsschrauben 12 und 13 aufweist. Die Befestigungsschrauben 12 sind dabei kürzer als die Befestigungsschrauben 13 zum Befestigen der Federdruckbremse 1 an einem Antriebsgehäuse, weil sie nur zur Verbindung des Magnetgehäuses 2 mit der deckelartigen Halterung 8 dienen. Diese mit dem Magnetgehäuse 2 über die Schrauben 12 verbindbare oder verbundene Halterung 8 für die Gegenscheibe 7 besteht dabei ebenfalls aus nicht magnetisierbarem Werkstoff, dessen spezifisches Gewicht geringer als das von Stahl oder Sintermetall ist. Dies trägt dazu bei, eine Federdruckbremse 1 mit möglichst geringem Gewicht auszubilden.

Vor allem in den Figuren 7 bis 9 ist erkennbar, dass diese Halterung 8 für die Gegenscheibe 7 gehäuseartig und als Deckel ausgebildet ist, der mit dem Magnetgehäuse 2 in Gebrauchsstellung über die Befestigungsschrauben 12 verbunden ist. Eine zusätzliche Verbindung ergibt sich durch die Befestigungsschrauben 13. Diese Halterung 8 kann dabei ebenfalls aus Kunststoff oder Aluminium und bevorzugt aus demselben Werkstoff bestehen, wie der zweite Teil 15 des Magnetgehäuses 2.

In den Figuren 1 bis 3 und 7 bis 9 ist dargestellt, dass die Halterung 8 für die Gegenscheibe 7 zwei in axialer Richtung verlaufende Öffnungen 18 für jeweils einen radial darin eingreifenden Vorsprung 19 der Ankerscheibe 5 aufweist, welche Vorsprünge 19 von der Ankerscheibe 5 radial nach außen überstehen, so dass die Halterung 8 die Ankerscheibe 5 in deren Gebrauchsstellung drehfest hält, wobei aber die Öffnungen 18 in axialer Richtung so groß bemessen sind, dass die Ankerscheibe 5 bei der Betätigung der Federdruckbremse 1 die erforderliche relative Axialbewegung durchführen kann.

Für eine möglichst einfache Montage und zusätzliche drehfeste Verbindung mit dem Magnetgehäuse 2 sind die Öffnungen 18 in axialer Richtung offen, so dass die Halterung 8 auf das Magnetgehäuse 2 und an diesem vorgesehene Gegenvorsprünge 20 aufgesteckt werden kann.

In den Figuren 3 und 5 ist dargestellt, dass der aus nicht magnetisierbarem Werkstoff bestehende zweite Teil 15 des Magnetgehäuses 2 an der von ihm überdeckten Stirnseite 14 a des Topfmagneten 14 mehrere Unterbrechungen 22 aufweist, zwischen denen Stege 21 die Verbindung zu dem die Befestigungsschrauben 12 und 13 aufnehmenden Bereich herstellen. Diese Unterbrechungen 22, die die Stirnseite 14 a freilassen, erleichtern den Wärmeabfluss von dem Topfmagneten 14 und vermindern das Gesamtgewicht. Darüber hinaus kann durch eine derartige Unterbrechung 22 die elektrische Zuleitung 26 zu der elektromagnetischen Spule 4 verlaufen, wie man es in Figur 3 erkennt.

Außerdem erkennt man in den Figuren 1, 3, 4 und 5, dass der an der Stirnseite 14 a des Topfmagneten 14 angeordnete zweite Teil 15 des Magnetgehäuses 2 eine zentrale Öffnung 23 koaxial zu der Längsmittelachse 10 der Federdruckbremse 1 und des Topfmagneten 14 und zu einer diesen durchsetzenden zentralen Öffnung 24 aufweist. Der kreisquerschnitt oder Durchmesser dieser an dem zweiten Teil 15 des Magnetgehäuses 2 befindlichen Öffnung 23 ist dabei geringer als der der zentralen Öffnung 24 der Federdruckbremse 1 bzw. des Topfmagneten 14. Man erkennt vor allem in Figur 4 und in Figur 1, dass dadurch ein radial in den Bereich der zentralen Öffnung 24 ragender Ringbereich 25 gebildet ist, der eine Abstützfläche für die zentrale Druckfeder 9 bildet, die mit ihrer diesem Ringbereich 25 abgewandten Seite gegen die Ankerscheibe 5 drückt.

Die Federdruckbremse 1 weist ein Magnetgehäuse 2 mit einem Ringraum bzw. einer Ringnut 3 zur Aufnahme einer elektromagnetischen Spule 4 auf. Das Magnetgehäuse 2 besteht aus zwei Teilen, deren erster Teil 14 dem Ringraum 3 aufweist und aus magnetisierbarem Sintermetall besteht, also einen Topfmagneten bildet. Der zweite Teil 15 des Magnetgehäuses 2 umschließt einen Teilbereich des ersten Teils 14 und dabei auch dessen Stirnseite 14 a und besteht aus einem nicht magnetisierbarem Werkstoff, dessen spezifisches Gewicht geringer als das des Werkstoffs des ersten Teils oder Topfmagneten 14 ist. Somit können magnetische Verluste vermindert oder vermieden und Gewicht eingespart werden.

## Patentansprüche

1. Federdruckbremse (1) mit einem einen ringförmigen Aufnahmeraum (3) für eine elektromagnetische Spule (4) aufweisenden Magnetgehäuse (2), welches mittels Befestigungsschrauben (13) mit einem Gehäuse eines Antriebs verbindbar ist, mit einer koaxial zu der elektromagnetischen Spule (4) angeordneten unverdrehbaren Ankerscheibe (5) aus magnetisch leitendem Werkstoff, mit einer koaxial zu der Ankerscheibe angeordneten, als Bremsscheibe (6) dienenden Rotorscheibe und mit einer unverdrehbaren, als Widerlager für die Brems- oder Rotorscheibe (6) dienenden Gegenscheibe (7), wobei die Federdruckbremse (1) eine zentrale Druckfeder (9) oder mit radialem Abstand zur Längsmittelachse (10) angeordnete einzelne Druckfedern zur Erzeugung des Bremsdrucks zwischen Ankerscheibe (5), Bremsscheibe (6) und Gegenscheibe (7) bei nicht bestromter elektromagnetischer Spule (4) aufweist und wobei Befestigungsschrauben (12), (13) zum Verbinden des Magnetgehäuses (2) mit einer Halterung (8), einem Gehäuse oder einem Flansch für die Gegenscheibe vorgesehen sind, **dadurch gekennzeichnet, dass** zumindest das Magnetgehäuse (2) aus wenigstens zwei Teilen besteht, deren erster Teil (14) als Topfmagnet den ringförmigen Aufnahmeraum (3) für die magnetische Spule (4) aufweist und der aus magnetisierbarem Werkstoff besteht, und dass der zweite Teil (15) des Magnetgehäuses (2) mit dem ersten Teil (14) verbunden ist, die Befestigungsstellen (16) für die Befestigungsschrauben (13) aufweist und aus einem nicht magnetisierbaren Werkstoff besteht, wobei der aus nicht magnetisierbarem Werkstoff bestehende zweite Teil (15) des Magnetgehäuses (2) an seinem Außenumfang in axialer Richtung orientierte Lochungen oder Vorsprünge oder Querschnittserweiterungen (18) für die Lochungen der Befestigungsschrauben (13) aufweist, und dass der erste Teil (14) des Magnetgehäuses (2) keine Bohrungen oder Lochungen für Befestigungsschrauben (12) aufweist.

2. Federdruckbremse nach Anspruch 1, **dadurch gekennzeichnet, dass** der mit dem Topfmagnet (14) verbundene zweite Teil (15) des Magnetgehäuses (2) aus einem Werkstoff besteht der ein geringeres spezifisches Gewicht als der Werkstoff des ersten Teils (14) des Magnetgehäuses (2) hat.

3. Federdruckbremse nach Anspruch 1 oder 2, **dadurch gekennzeichnet, dass** der aus einem leichteren Werkstoff als der Topfmagnet (14) bestehende, nicht magnetisierbare zweite Teil (15) des Magnetgehäuses (2) eine geringeres Gewicht als der erste Teil (14) des Magnetgehäuses (2) hat.

4. Federdruckbremse nach einem der Ansprüche 1 bis 3, **dadurch gekennzeichnet, dass** der nicht magnetisierbare Werkstoff des zweiten Teils (15) des Magnetgehäuses (2) ein spritzgießfähiger Werkstoff, Kunststoff oder Aluminium ist.

5. Federdruckbremse nach einem der Ansprüche 1 bis 4, **dadurch gekennzeichnet, dass** der erste aus magnetisierbaren Werkstoff bestehende Teil (14) des Magnetgehäuses und der zweite Teil (15) des Magnetgehäuses (2) durch Spritzgießen miteinander verbunden sind.

6. Federdruckbremse nach einem der Ansprüche 1 bis 5, **dadurch gekennzeichnet, dass** zumindest an der Außenseite oder Umfangsseite des ersten magnetisierbaren Teils (14) des Magnetgehäuses (2) wenigstens ein von der Kontur dieser Außenseite, von einer runden oder zylindrischen Kontur abweichender Bereich (17) oder mehrere derartige Bereiche vorgesehen sind, der/die in Gebrauchsstellung in den nicht magnetisierbaren Werkstoff des zweiten Teils (15) eingreift oder eingebettet ist/sind.

7. Federdruckbremse nach einem der Ansprüche 1 bis 6, **dadurch gekennzeichnet, dass** der aus nicht magnetisierbarem Werkstoff bestehende zweite Teil (15) des Magnetgehäuses (2) an der von ihm überdecktem Stirnseite (14a) des Topfmagneten (14) wenigstens eine oder mehrere Unterbrechungen (22) aufweist.

8. Federdruckbremse nach einem der Ansprüche 1 bis 7, **dadurch gekennzeichnet, dass** die elektrische Zuleitung (26) zu der elektromagnetischen Spule (4) durch eine unterstirnseitige Unterbrechung (22) des zweiten Teils (15) des Magnetgehäuses (2) verläuft.

9. Federdruckbremse nach einem der Ansprüche 1 bis 8, **dadurch gekennzeichnet, dass** der magnetisierbare erste Teil (14) des Magnetgehäuses (2) aus Sintermetall besteht.

10. Federdruckbremse nach einem der Ansprüche 1 bis 9, **dadurch gekennzeichnet, dass** die mit dem Magnetgehäuse (2) verbindbare oder verbundene Halterung (8) für die Gegenscheibe (7) aus nicht magnetisierbarem Werkstoff, insbesondere aus einem Werkstoff besteht, dessen spezifisches Gewicht geringer als das von Stahl oder Sintermetall ist.

11. Federdruckbremse nach einem der Ansprüche 1 bis 10, **dadurch gekennzeichnet, dass** die Halterung (8) für die Gegenscheibe (7) als Deckel ausgebildet ist, der mit dem Magnetgehäuse (2) in Gebrauchsstellung über Befestigungsschrauben (12) und /oder die Befestigungsschrauben (13) für die Federdruckbremse (1) verbunden ist und aus Kunststoff oder Aluminium, bevorzugt aus demselben Werkstoff wie der zweite Teil (15) des Magnetgehäuses (2) besteht.

12. Federdruckbremse nach einem der Ansprüche 1 bis 11, **dadurch gekennzeichnet, dass** die Halterung (8) für die Gegenscheibe (7) wenigstens eine in axiale Richtung verlaufende Öffnung (18) für einen radial darin eingreifenden Vorsprung (19) der Ankerscheibe (5) oder für zwei einander am Umfang der Anordnung gegenüberliegende Öffnungen (18) für zwei miteinander fluchtende Vorsprünge (19) der Ankerscheibe (5) aufweist und dass die Halterung (8) dadurch auch die Ankerscheibe (5) in deren Gebrauchsstellung hält.

13. Federdruckbremse nach einem der Ansprüche 1 bis 12, **dadurch gekennzeichnet, dass** der an der Stirnseite (14a) des Topfmagneten (14) angeordnete zweite Teil (15) des Magnetgehäuses (2) aus nicht magnetisierbarem Werkstoff eine zentrale Öffnung (23) koaxial zu der Längsmittelachse (10) des Topfmagneten (14) und zu einer diesen durchsetzenden zentralen Öffnung (24) aufweist, deren Kreisquerschnitt oder Durchmesser geringer als der der zentrale Öffnung (24) der Federdruckbremse (1) ist, und dass der radial in dem Bereich der zentralen Öffnung (24) ragende Ringbereich (25) des zweiten Teils eine Abstützfläche für eine zentrale Druckfeder (9) bildet.

## Claims

1. Spring pressure brake (1) having a magnet housing (2) which has an annular receiving space (3) for an electromagnetic coil (4) and can be connected by means of fastening screws (13) to a housing of a drive, having a non-rotatable armature disk (5) which is arranged coaxially with respect to the electromagnetic coil (4) and is made from magnetically conducting material, having a rotor disk which is arranged coaxially with respect to the armature disk and serves as brake disk (6), and having a non-rotatable mating disk (7) which serves as abutment for the brake or rotor disk (6), the spring pressure brake (1) having a central compression spring (9) or individual compression springs which are arranged at a radial spacing from the longitudinal center axis (10) in order to generate the brake pressure between the armature disk (5), brake disk (6) and mating disk (7) when current is not applied to the electromagnetic coil (4), and fastening screws (12), (13) being provided for connecting the magnet housing (2) to a holding device (8), a housing or a flange for the mating disk, **characterized in that** at least the magnet housing (2) consists of at least two parts, the first part (14) of which has, as pot magnet, the annular receiving space (3) for the magnetic coil (4) and which is composed of magnetizable material, and **in that** the second part (15) of the magnet housing (2) is connected to the first part (14), has the fastening points (16) for the fastening screws (13) and is composed of a non-magnetizable material, that second part (15) of the magnet housing (2) which is composed of non-magnetizable material having, on its outer circumference, holes or projections or cross-sectional widened portions (18) which are oriented in the axial direction for the holes of the fastening screws (13), and **in that** the first part (14) of the magnet housing (2) does not have any bores or holes for fastening screws (12).

2. Spring pressure brake according to Claim 1, **characterized in that** that second part (15) of the magnet housing (2) which is connected to the pot magnet (14) is composed of a material which has a lower specific weight than the material of the first part (14) of the magnet housing (2).

3. Spring pressure brake according to Claim 1 or 2, **characterized in that** that non-magnetizable second part (15) of the magnet housing (2) which is composed of a lighter material than the pot magnet (14) has a lower weight than the first part (14) of the magnet housing (2).

4. Spring pressure brake according to one of Claims 1 to 3, **characterized in that** the non-magnetizable material of the second part (15) of the magnet housing (2) is a material which can be injection molded, plastic or aluminum.

5. Spring pressure brake according to one of Claims 1 to 4, **characterized in that** that first part (14) of the magnet housing which is composed of magnetizable material and the second part (15) of the magnet housing (2) are connected to one another by injection molding.

6. Spring pressure brake according to one of Claims 1 to 5, **characterized in that**, at least on the outer side or circumferential side of the first magnetizable part (14) of the magnet housing (2), at least one region (17) which differs from the contour of this outer side, from a round or cylindrical contour or a plurality of regions of this type is/are provided which engages/engage or is/are embedded into the non-magnetizable material of the second part (15) in the use position.

7. Spring pressure brake according to one of Claims 1 to 6, **characterized in that** that second part (15) of the magnet housing (2) which is composed of non-magnetizable material has at least one or more interruptions (22) on that end side (14a) of the pot magnet (14) which is covered by it.

8. Spring pressure brake according to one of Claims 1 to 7, **characterized in that** the electric feed line (26) to the electromagnetic coil (4) runs through an interruption (22), on the lower end side, of the second part (15) of the magnet housing (2).

9. Spring pressure brake according to one of Claims 1 to 8, **characterized in that** the magnetizable first part (14) of the magnet housing (2) is composed of sintered metal.

10. Spring pressure brake according to one of Claims 1 to 9, **characterized in that** the holding device (8), which can be connected or is connected to the magnet housing (2), for the mating disk (7) is composed of non-magnetizable material, in particular from a material, the specific weight of which is lower than that of steel or sintered metal.

11. Spring pressure brake according to one of Claims 1 to 10, **characterized in that** the holding device (8) for the mating disk (7) is configured as a cover which is connected to the magnet housing (2) in the use position via fastening screws (12) and/or the fastening screws (13) for the spring pressure brake (1) and is composed of plastic or aluminum, preferably from the same material as the second part (15) of the magnet housing (2).

12. Spring pressure brake according to one of Claims 1 to 11, **characterized in that** the holding device (8) for the mating disk (7) has at least one opening (18) which runs in the axial direction for a projection (19), engaging radially therein, of the armature disk (5) or for two openings (18), lying opposite one another on the circumference of the arrangement, for two projections (19) of the armature disk (5) which are aligned with one another, and **in that** the holding device (8) also holds the armature disk (5) in its use position as a result.

13. Spring pressure brake according to one of Claims 1 to 12, **characterized in that** that second part (15) of the magnet housing (2) which is arranged on the end side (14a) of the pot magnet (14) and is made from non-magnetizable material has a central opening (23) coaxially with respect to the longitudinal center axis (10) of the pot magnet (14) and with respect to a central opening (24) which penetrates it and the circular cross section or diameter of which is smaller than that of the central opening (24) of the spring pressure brake (1), and **in that** that annular region (25) of the second part which projects radially in the region of the central opening (24) forms a supporting face for a central compression spring (9).

## Revendications

1. Frein (1) à pression de ressort, comprenant un carter magnétique (2) qui comporte un logement annulaire (3) dédié à une bobine électromagnétique (4), et peut être relié au carter d'un entraînement au moyen de vis de fixation (13) ; un disque d'induit (5) non rotatif en un matériau à conductivité magnétique, disposé coaxialement à ladite bobine électromagnétique (4) ; un disque rotorique disposé coaxialement audit disque d'induit et remplissant la fonction d'un disque de freinage (6) ; et un disque complémentaire (7) non rotatif, remplissant la fonction d'une contre-butée affectée audit disque rotorique (6) ou disque de freinage, sachant que ledit frein (1) à pression de ressort comporte un ressort central de pression (9) ou des ressorts individuels de pression situés radialement à distance de l'axe médian longitudinal (10), en vue d'engendrer la pression de freinage entre ledit disque d'induit (5), ledit disque de freinage (6) et ledit disque complémentaire (7) lorsque ladite bobine électromagnétique (4) n'est pas alimentée en courant, et sachant que des vis de fixation (12, 13) sont prévues pour relier ledit carter magnétique (2) à une pièce de retenue (8), à un carter ou une bride destiné(e) audit disque complémentaire, **caractérisé par le fait qu'**au moins le carter magnétique (2) est composé d'au moins deux parties parmi lesquelles la première partie (14), se présentant comme un pot magnétique, est munie du logement annulaire (3) dédié à la bobine magnétique (4) et est constituée d'un matériau magnétisable ; **par le fait que** la seconde partie (15) dudit carter magnétique (2) est reliée à ladite première partie (14), est pourvue des zones de fixation (16) assignées aux vis de fixation (13) et est constituée d'un matériau non magnétisable, ladite seconde partie (15) dudit carter magnétique (2), constituée d'un matériau non magnétisable, comportant, sur son pourtour extérieur, des perforations ou des protubérances orientées dans le sens axial, voire des élargissements de section transversale (18) dévolus aux trous de passage desdites vis de fixation (13) ; et **par le fait que** ladite première partie (14) dudit carter magnétique (2) est dépourvue de perçages ou de perforations destiné(e)s à des vis de fixation (12).

2. Frein à pression de ressort selon la revendication 1, **caractérisé par le fait que** la seconde partie (15) du carter magnétique (2), reliée au pot magnétique (14), est constituée d'un matériau doté d'un poids spécifique moindre que celui du matériau constituant la première partie (14) dudit carter magnétique (2).

3. Frein à pression de ressort selon la revendication 1 ou 2, **caractérisé par le fait que** la seconde partie (15) du carter magnétique (2), non magnétisable et constituée d'un matériau plus léger que celui du pot magnétique (14), présente un poids moindre que celui de la première partie (14) dudit carter magnétique (2).

4. Frein à pression de ressort selon l'une des revendications 1 à 3, **caractérisé par le fait que** le matériau non magnétisable, constituant la seconde partie (15) du carter magnétique (2), est un matériau apte au moulage par injection, une matière plastique ou de l'aluminium.

5. Frein à pression de ressort selon l'une des revendications 1 à 4, **caractérisé par le fait que** la première partie (14) du carter magnétique, constituée d'un matériau magnétisable, et la seconde partie (15) dudit carter magnétique (2), sont reliées l'une à l'autre par moulage par injection.

6. Frein à pression de ressort selon l'une des revendications 1 à 5, **caractérisé par** la présence, au moins à la face extérieure ou sur la face périphérique de la première partie magnétisable (14) du carter magnétique (2), d'au moins une région (17) différant du profil de cette face extérieure, d'un profil circulaire ou d'un profil cylindrique, voire de plusieurs régions de ce type, ladite/lesdites région(s) pénétrant dans le matériau non magnétisable de la seconde partie (15), ou étant noyée(s) dans ledit matériau en position d'utilisation.

7. Frein à pression de ressort selon l'une des revendications 1 à 6, **caractérisé par le fait que** la seconde partie (15) du carter magnétique (2), constituée d'un matériau non magnétisable, présente au moins une ou plusieurs discontinuité(s) (22) à la face extrême (14a) du pot magnétique (14) qui est recouverte par ladite partie.

8. Frein à pression de ressort selon l'une des revendications 1 à 7, **caractérisé par le fait que** le conducteur (26) d'alimentation électrique, gagnant la bobine électromagnétique (4), traverse une discontinuité (22) située à la face extrême inférieure de la seconde partie (15) du carter magnétique (2).

9. Frein à pression de ressort selon l'une des revendications 1 à 8, **caractérisé par le fait que** la première partie magnétisable (14) du carter magnétique (2) est constituée d'un métal fritté.

10. Frein à pression de ressort selon l'une des revendications 1 à 9, **caractérisé par le fait que** la pièce de retenue (8) dédiée au disque complémentaire (7), reliée ou pouvant être reliée au carter magnétique (2), est constituée d'un matériau non magnétisable, en particulier d'un matériau dont le poids spécifique est moindre que celui de l'acier ou du métal fritté.

11. Frein à pression de ressort selon l'une des revendications 1 à 10, **caractérisé par le fait que** la pièce de retenue (8) dédiée au disque complémentaire (7) est réalisée sous la forme d'un couvercle qui est relié au carter magnétique (2), en position d'utilisation, par l'intermédiaire de vis de fixation (12) et/ou des vis de fixation (13) dévolues audit frein (1) à pression de ressort, et qui est constitué d'une matière plastique ou d'aluminium, de préférence du même matériau que celui constituant la seconde partie (15) dudit carter magnétique (2).

12. Frein à pression de ressort selon l'une des revendications 1 à 11, **caractérisé par le fait que** la pièce de retenue (8), dédiée au disque complémentaire (7), est percée d'au moins un orifice (18) s'étendant dans le sens axial et assigné à une protubérance (19) du disque d'induit (5) qui pénètre radialement dans ledit orifice, ou de deux orifices (18) mutuellement opposés sur le pourtour de l'ensemble et assignés à deux protubérances (19) dudit disque d'induit (5), qui sont alignées l'une avec l'autre ; et **par le fait que**, de la sorte, ladite pièce de retenue (8) retient également ledit disque d'induit (5) dans la position d'utilisation de ce dernier.

13. Frein à pression de ressort selon l'une des revendications 1 à 12, **caractérisé par le fait que** la seconde partie (15) du carter magnétique (2), constituée d'un matériau non magnétisable et disposée à la face extrême (14a) du pot magnétique (14), est percée d'un orifice central (23) qui est coaxial à l'axe médian longitudinal (10) dudit pot magnétique (14) et à un orifice central (24) traversant ledit pot, et qui est doté d'une plus petite section transversale circulaire ou d'un plus diamètre que l'orifice central (24) dudit frein (1) à pression de ressort ; et **par le fait que** la zone annulaire (25) de ladite seconde partie, faisant radialement saillie dans la région dudit orifice central (24), forme une surface d'appui affectée à un ressort central de pression (9).
